# EUROPÄISCHE PATENTANMELDUNG

(11) **EP 2 290 301 A2**
(43) Veröffentlichungstag der Anmeldung: **02.03.2011**
(21) Anmeldenummer: 10168443.9
(22) Anmeldetag: 05.07.2010
(51) Int. Cl.: F24H 8/00

(54) **Brennwertkessel**

(30) Priorität: 08.07.2009 DE 102009032121
(71) Anmelder: Robert Bosch GmbH, 70442 Stuttgart (DE)
(72) Erfinder: Mueller, Thomas, 35649 Bischoffen (DE); Henrich, Holger, 35633 Lahnau (DE); Baasner, Bernd, 35305 Gruenberg (DE); Reinhardt, Joachim, 35440 Grossen-Linden (DE)

(57) **Zusammenfassung**

Die Erfindung betrifft einen Brennwertkessel, umfassend einen Gas- oder Ölbrenner in einer Brennkammer (1), welche mindestens auf einem Großteil ihres Umfangs von einem mit Wasser durchströmten Wärmetauscher begrenzt ist, mindestens einen Spalt (4) für den Durchtritt von Heizgasen durch den Wärmetauscher in einen radial außerhalb des Wärmetauschers angeordneten Abgassammelraum, welcher einen Anschlussstutzen (10) für eine Abgasleitung aufweist, ein vorderes Deckelelement (2) zur Aufnahme des Brenners, ein hinteres Deckelelement (3) als Verschluss für die Brennkammer (1), sowie einen Rücklaufanschlussstutzen (5) im unteren und einen Vorlaufanschlussstutzen (6) im oberen Bereich der Anordnung.

Der Erfindung liegt die Aufgabe zugrunde, einen Brennwertkessel besonders im Hinblick auf möglichst kompakte Abmessungen und gute Wärmeübertragungseigenschaften zu optimieren.

Gekennzeichnet ist die Erfindung dadurch, dass die Brennkammer (1) etwa horizontal angeordnet ist, mindestens im unteren und in den seitlichen Bereichen von mehreren, mit der Längsachse der Brennkammer (1) parallelen Wärmetauscherrohren (7, 7') einer ersten Wärmetauscherstufe (A) begrenzt ist, welche jeweils zwischen zwei benachbarten Wärmetauscherrohren (7, 7') einen axial verlaufenden Spalt (4) für den Durchtritt von Heizgasen in radialer Richtung in einen ersten Abgassammelraum (8) ausbilden, und dass unterhalb der ersten brennkammernahen Wärmetauscherrohre (7, 7') eine zweite Anordnung mit Wärmetauscherrohren (7, 7') als zweite Wärmetauscherstufe (B) vorgesehen ist, so dass die Heizgase vom ersten Abgassammelraum (8) durch die axial verlaufenden Spalte (4) der zweiten Wärmetauscherstufe (B) strömen und danach in einen zweiten Abgassammelraum

## Beschreibung

Die Erfindung betrifft einen Brennwertkessel nach dem Oberbegriff des Patentanspruches 1.

Gattungsgemäße Brennwertkessel werden mit einem Gas- oder Ölbrenner befeuert und besitzen eine zylindrische Brennkammer, welche bei bekannten Geräten meistens radial von einem schraubenförmig gewendelten Wärmetauscher begrenzt ist. Mindestens ein Spalt zwischen den Rohrwendeln für den Durchtritt der Heizgase stellt die eigentliche Wärmetauscherfläche dar. Weiterhin üblich sind ein vorderes Deckelelement zur Aufnahme des Brenners, ein hinteres Deckelelement als Verschluss für die Brennkammer, Vor- und Rücklaufanschlussstutzen sowie ein Abgassammelraum, welcher radial außerhalb des Wärmetauschers unter einem umgebenden Mantel angeordnet und mit einem Anschlussstutzen für eine Abgasleitung versehen ist. Hinsichtlich der heizwasserseitigen Strömungsführung handelt es sich um einen zwangsdurchströmten Wärmetauscher. Eine Umwälzpumpe sorgt für einen vorgegebenen Wasservolumenstrom durch die zumeist relativ engen Wasserkanäle. Auf diese Weise sind trotz geringen Wasserinhaltes recht hohe, heizgasseitig eingetragene Wärmestromdichten realisierbar.

Aus der DE 20 2005 011 633 U1 ist ein Heizgerät mit zwei schraubenförmig gewendelten Wärmetauschern bekannt, die ineinander verschraubt und parallel zueinander von einem Heizmedium durchströmbar ausgebildet sind. Dabei sind die nebeneinander angeordneten Wendelenden miteinander verbunden und weisen einen gemeinsamen Anschlussstutzen auf. Vor- und Rücklaufanschlussstutzen befinden sich auf gegenüberliegenden Stirnseiten des Wärmetauschers.

Die DE 10 2004 023 711 B3 zeigt ebenfalls ein Heizgerät mit einem schraubenförmig gewendelten Wärmetauscher und mindestens zwei hydraulisch miteinander verbundenen Wendelbereichen. Diese sind durchmesserunterschiedlich ausgebildet und können schraubenförmig ineinander gedreht angeordnet sein. Das Abgas strömt somit zuerst durch die Spalte der inneren Wendel und dann über einen Zwischenraum weiter durch die Spalte in der äußeren Wendel. Weil auch bei dieser Ausführung ein einstückiges Rohr, insbesondere Vierkantrohr, eingesetzt wird, ist es fertigungstechnisch dabei kaum möglich, auf die Spaltgeometrie Einfluss zu nehmen.
Weiterhin ist aus der DE 10 2006 029 854 A1 ein Wärmetauscher mit ringförmig ausgebildeten Strömungskanälen bekannt. Hier werden mehrere gleiche ringförmige Segmente vertikal und parallel zueinander zu einem Wärmetauscher kombiniert. Zwischen den Segmenten befindet sich ein Spalt für den Durchtritt der Heizgase von der im Zentrum angeordneten Brennkammer nach außen. Die Wärme übertragenden Oberflächen begrenzen beidseitig diesen Spalt und im Inneren der Segmente strömt das Heizmedium. Auch wenn hier ein zwangsdurchströmter Wärmetauscher mit einer wechselweise oben und unten vorgesehenen Überströmung von Segment zu Segment vorliegt, kann es zu Problemen kommen, weil eine vollständige Entlüftung aus den oberen Bereichen der einzelnen Segmente nicht möglich ist.

Der Erfindung liegt die Aufgabe zugrunde, einen Brennwertkessel besonders im Hinblick auf möglichst kompakte Abmessungen und gute Wärmeübertragungseigenschaften zu optimieren.

Erfindungsgemäß wird dies mit den Merkmalen des Patentanspruches 1 gelöst. Vorteilhafte Weiterbildungen sind den Unteransprüchen zu entnehmen.

Der Brennwertkessel ist **dadurch gekennzeichnet, dass** die Brennkammer etwa horizontal angeordnet ist und mindestens im unteren und in den seitlichen Bereichen von mehreren, mit der Längsachse der Brennkammer parallelen Wärmetauscherrohren einer ersten Wärmetauscherstufe begrenzt ist. Diese bilden jeweils zwischen zwei benachbarten Wärmetauscherrohren einen axial verlaufenden Spalt für den Durchtritt von Heizgasen in radialer Richtung in einen ersten Abgassammelraum aus. Unterhalb der ersten brennkammernahen Wärmetauscherrohre ist eine zweite Anordnung mit Wärmetauscherrohren als zweite Wärmetauscherstufe vorgesehen, so dass die Heizgase vom ersten Abgassammelraum durch die axial verlaufenden Spalte der zweiten Wärmetauscherstufe strömen und danach in einen zweiten Abgassammelraum mit einem Anschlussstutzen für eine Abgasleitung gelangen.

Alle Wärmetauscherrohre weisen jeweils die gleiche Geometrie auf und die Gesamtanordnung ist symmetrisch zur vertikalen Längsachse. Die Wärmetauscherrohre sind so angeordnet, dass der sich jeweils zwischen zwei benachbarten Wärmetauscherrohren ergebende Spalt auf jeden Fall ein Gefälle nach außen und/oder unten aufweist, um Kondenswasser aus der Brennkammer und/oder einem Spalt nach außen in einen der Abgassammelräume abzuleiten.
In einer ersten Ausführungsform bestehen die Wärmetauscherrohre aus Strangpressprofilen mit einem im Wesentlichen rechteckigen Querschnitt, wahlweise mit ein- und/oder austrittsseitigen Radien oder Rundungen. Die Wärmetauscherrohre der ersten Wärmetauscherstufe begrenzen die untere Hälfte der Brennkammer und sind symmetrisch zur vertikalen Mittelachse der Brennkammer angeordnet. Dabei befindet sich die Außenseite des jeweils letzten Wärmetauscherrohres auf beiden Seiten auf oder knapp unterhalb der horizontalen Mittelachse der Brennkammer.

In einer zweiten Ausführungsform ist der Querschnitt der Wärmetauscherrohre sichelförmig gestaltet. Dabei weisen die jeweils einem benachbarten Wärmetauscherrohr zugeordneten Flanken einen identischen Innen- und Außenradius auf. Weiterhin sind die radial nach innen und außen gerichteten Flächen der Wärmetauscherrohre parallel oder etwa parallel zueinander ausgerichtet. Die wasserseitige Anbindung der Wärmetauscherrohre erfolgt jeweils stirnseitig, über einen Anschluss an das vordere und hintere Deckelelement. In eine oder beide Flanken eines Wärmetauscherrohres sind vorzugsweise Sicken und/oder Nocken als den Spalt begrenzende Oberflächen eingebracht, welche die Breite des Spaltes definieren und sich aufeinander und/oder auf der gegenüber liegenden Oberfläche abstützen.

In der Gesamtanordnung des Brennwertkessels sind die sichelförmigen Wärmetauscherrohre auf beiden Halbseiten der Mittelachse spiegelsymmetrisch zueinander angeordnet. Dabei liegt die Symmetrieebene vertikal. Unterhalb der Brennkammer, auf der Symmetrieebene, ist in der ersten und zweiten Wärmetauscherstufe jeweils ein längssymmetrisches Ausgleichsrohr angeordnet. Dieses ist auf beiden Längsseiten an die spiegelsymmetrischen Geometrien der sichelförmigen Wärmetauscherrohre angepasst und bildet mit dem jeweils zugeordneten benachbarten Wärmetauscherrohr einen axial verlaufenden Spalt für den Durchtritt von Heizgasen. Es wird ebenso von Wasser durchströmt.

Das Rücklaufwasser strömt, ausgehend vom Rücklaufanschlussstutzen im unteren Bereich, parallel durch alle Wärmetauscherrohre der zweiten Wärmetauscherstufe und wird am gegenüber liegenden Ende der Anordnung nach oben umgelenkt. Es strömt dann parallel durch alle Wärmetauscherrohre der ersten Wärmetauscherstufe, wird erneut nach oben umgelenkt und gelangt oberhalb der Brennkammer zum Vorlaufanschlussstutzen im oberen Bereich der Anordnung.

In einer bevorzugten Ausführungsform ist oberhalb der Brennkammer ein etwa horizontal verlaufender und die Brennkammer nach oben hin begrenzender Schacht angeordnet. In diesen tritt vorgewärmtes Wasser nach dem Austritt aus den Wärmetauscherrohren der ersten Wärmetauscherstufe, auf der dem Deckelelement zur Aufnahme des Brenners gegenüber liegenden Seite, stirnseitig ein und durch einen Vorlaufanschlussstutzen auf der Oberseite des Schachtes, insbesondere im brennernahen Bereich, aus. Der die Brennkammer nach oben hin begrenzende Schacht kann wahlweise einen rechteckigen, trapezförmigen, dachartigen, nach oben hin gewölbten oder etwa halbrunden Querschnitt besitzen. Er erstreckt sich vorzugsweise mit seinen beiden nach unten gerichteten Längsseiten bis etwa in die äußeren Randbereiche der jeweils oberen Wärmetauscherrohre der ersten Wärmetauscherstufe, so dass jeweils zwischen der Unterseite des Schachtes und der Oberseite des letzten bzw. benachbarten Wärmetauscherrohres ein Spalt für den Durchtritt von Heizgasen nach außen gebildet wird.

Eine ergänzende Ausführungsform sieht vor, dass der die Brennkammer nach oben hin begrenzende Wasser führende Schacht im Bereich seiner beiden nach unten gerichteten Längsseiten mit einer längs verlaufenden Trennwand unterteilt ist. Dadurch wird in den beiden seitlichen Randbereichen jeweils ein weiterer Kanal mit einem kleineren Querschnitt als der verbleibende übrige Querschnitt ausgebildet.

Erstens können die beiden Kanäle im seitlichen Bereich des Schachtes parallel zur ersten Wärmetauscherstufe durchströmt werden. Dabei wird das Wasser danach umgelenkt und durchströmt den übrigen, oberen Bereich des Schachtes in Richtung des Vorlaufanschlussstutzens. Zweitens können die beiden Kanäle im seitlichen Bereich des Schachtes entgegengesetzt zur ersten Wärmetauscherstufe und damit genauso wie der übrige Bereich des Schachtes in Richtung des Vorlaufanschlussstutzens durchströmt werden. Dabei sind die Kanäle und/oder deren Ein- und/oder Auslassbereiche vorzugsweise so ausgelegt, dass die Strömungsgeschwindigkeit in den Kanälen höher ist als im übrigen Bereich des Schachtes, um beispielsweise eine intensive Kühlung der Randbereiche zu erzielen.

Der Rücklaufanschlussstutzen ist vorteilhafterweise auf der dem Deckelelement zur Aufnahme des Brenners gegenüber liegenden Stirnseite angeordnet, vorzugsweise relativ weit unten, etwa auf Höhe der zweiten Wärmetauscherstufe.

Mit der erfindungsgemäßen Gestaltung entsteht ein Brennwertkessel mit sehr kompakten Abmessungen und guten Wärmeübertragungseigenschaften. Der Gesamtaufbau mit gleichen Wärmetauscherrohren bietet neben der einfachen Herstellung nicht nur den Vorteil, unterschiedliche Längen für verschiedene Feuerungs- und Wärmetauscherleistungen variabel abzudecken. Es können auch die Feuerraumgröße sowie die Wärmeübertragungsleistung über die Rohranzahl und somit den Teilkreisdurchmesser variiert werden. Trotzdem bleiben dann alle verwendeten Wärmetauscherrohre gleich, und Varianten ergeben sich nur bei unterschiedlichen Deckelementen, welche dann aber mit gleichen Anbauteilen bzw. Komponenten verbunden werden können.

Weiterhin variiert nur der umgebende Mantel in der Länge. Wegen der niedrigen Abgastemperaturen kann dieser sogar aus Kunststoff hergestellt werden. Bei der Herstellung der Wärmetauscherrohre bieten sich vielfältige Gestaltungsmöglichkeiten. Es kann beispielsweise ein Aluminium-Stranggussprofil als Endlos-Rohrprofil eingesetzt werden, wobei nach dem Ablängen eines Wärmetauscherrohres dieses dann an den Enden noch mit einer entsprechenden Aufweitung versehen werden muss, damit sich im mittleren Bereich das Spaltmaß ergibt. Weiterhin bieten sich Hydroformverfahren zur Herstellung der Wärmetauscherrohre an. Auch kann Edelstahl als Rohrwerkstoff zum Einsatz kommen. Als Verbindungsverfahren für Wärmetauscherrohre, Deckelelemente und/oder Wasser führende Teile sind das Schweißen, Löten und Kleben geeignet.

Mit dem Einbauwinkel der einzelnen Wärmetauscherrohre zueinander ist ein geschlossener Ring darstellbar. Somit wird eine unterschiedliche Anzahl von Wärmetauscherrohren auf dem Umfang angeordnet, um unterschiedliche Innendurchmesser des Ringes und damit unterschiedliche Brennkammer-Durchmesser zu erhalten. Über die Variation des Einbauwinkels wird daher die jeweilige Einbaulage eines Wärmetauscherrohres auf dem entsprechenden Teilkreisdurchmesser optimiert. Kondenswasser wird immer sicher und schnell nach unten abgeführt. Auch ist die zweite Wärmetauscherstufe für Reinigungsarbeiten gut nach Aufschwenken der Brennertür erreichbar.

Generell sind die Wärmetauscherrohre jeweils stirnseitig mit dem vorderen und hinteren Deckelement verbunden und dort wasserseitig angeschlossen. Der Spalt für den Durchtritt von Heizgasen zwischen zwei benachbarten, einander zugeordneten Wärmetauscherrohren wird durch eine Verjüngung des wasserseitigen Querschnitts im Bereich der Flanken zwischen den Rohrenden ausgebildet. Diese Verjüngung kann bei sichelförmigen Rohren an der Flanke mit Innenradius, an der Flanke mit Außenradius und/oder an beiden Flanken ausgebildet sein. Vorzugsweise weist der Spalt für den Durchtritt von Heizgasen eine Breite im Bereich von etwa 1 mm bis 2 mm auf. In einer Ausgestaltung kann der Spalt für den Durchtritt von Heizgasen eine konstante Breite über den gesamten Strömungsweg in radialer Richtung besitzen. Alternativ dazu ist es auch möglich, dass dessen Breite von innen nach außen abnimmt und dadurch an das sich mit der Abkühlung verringernde Heizgasvolumen angepasst ist.

Die Zeichnung stellt ein Ausführungsbeispiel der Erfindung dar. Es zeigt einen Brennwertkessel:
- Fig. 1:: in einer perspektivischen Ansicht mit einem vertikalen Längsschnitt,
- Fig. 2:: in einem vertikalen Längsschnitt,
- Fig. 3:: mit symmetrischen Wärmetauscherrohren in einem Querschnitt und
- Fig. 4:: mit sichelförmigen Wärmetauscherrohren in einem Querschnitt.

Der Brennwertkessel besteht im Wesentlichen aus einer Brennkammer 1 mit einem vorderen Deckelelement 2, hier dargestellt als wassergekühlte Brennertür, zur Aufnahme eines Brenners, und einem hinteren Deckelelement 3 als Verschluss für die Brennkammer 1, welche überwiegend von einem mit Wasser durchströmten Wärmetauscher begrenzt ist. Dieser besitzt Spalte 4 für den Durchtritt von Heizgasen. Weiterhin befindet sich ein Rücklaufanschlussstutzen 5 im unteren Bereich auf der dem Deckelelement 2 zur Aufnahme des Brenners gegenüber liegenden Stirnseite und einen Vorlaufanschlussstutzen 6 im oberen Bereich der Anordnung.

Die Brennkammer 1 ist etwa horizontal angeordnet und wird in der unteren Hälfte von mehreren, mit der Längsachse der Brennkammer 1 parallelen Wärmetauscherrohren 7 einer ersten Wärmetauscherstufe A begrenzt. Jeweils zwischen zwei benachbarten Wärmetauscherrohren 7 sind axial verlaufende Spalte 4 für den Durchtritt von Heizgasen in radialer Richtung in einen ersten Abgassammelraum 8 vorhanden. Die Wärmetauscherrohre der ersten Wärmetauscherstufe A begrenzen die untere Hälfte der Brennkammer 1 und sind symmetrisch zur vertikalen Mittelachse der Brennkammer 1 angeordnet. Unterhalb der ersten brennkammernahen Wärmetauscherrohre 7 ist eine zweite Anordnung mit Wärmetauscherrohren 7 als zweite Wärmetauscherstufe B vorgesehen, so dass die Heizgase vom ersten Abgassammelraum 8 durch die axial verlaufenden Spalte der zweiten Wärmetauscherstufe B strömen und danach in einen zweiten Abgassammelraum 9 mit einem Anschlussstutzen 10 für eine Abgasleitung gelangen.
Alle Wärmetauscherrohre 7 weisen jeweils die gleiche Geometrie auf, sind in der Gesamtanordnung symmetrisch zur vertikalen Längsachse, jeweils stirnseitig mit dem vorderen und hinteren Deckelelement 3 verbunden, und dort wasserseitig angeschlossen.

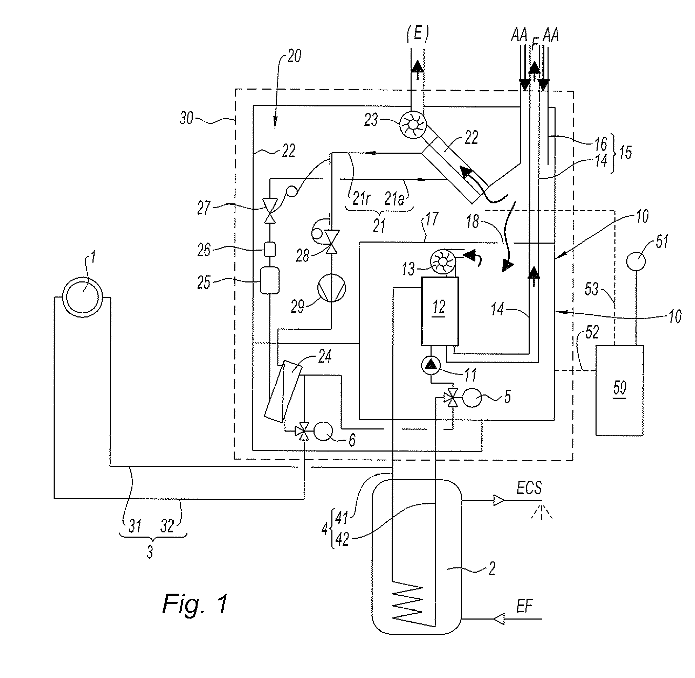

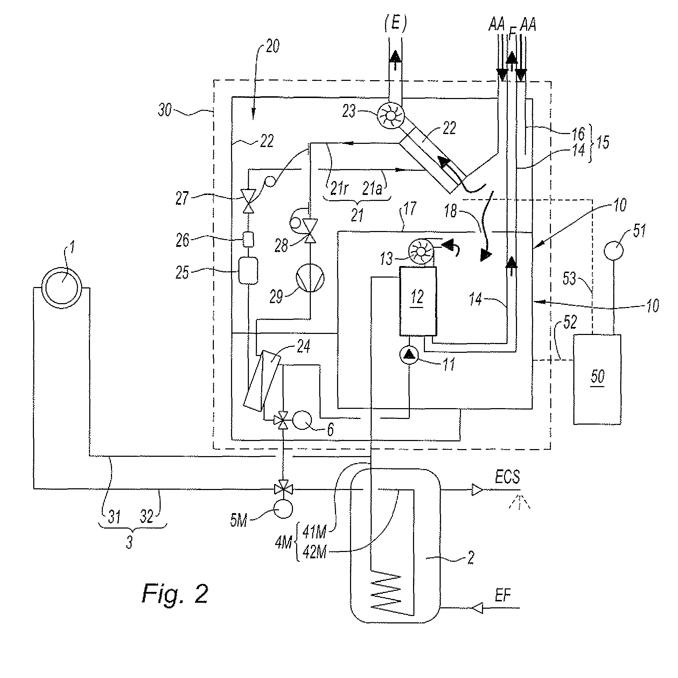

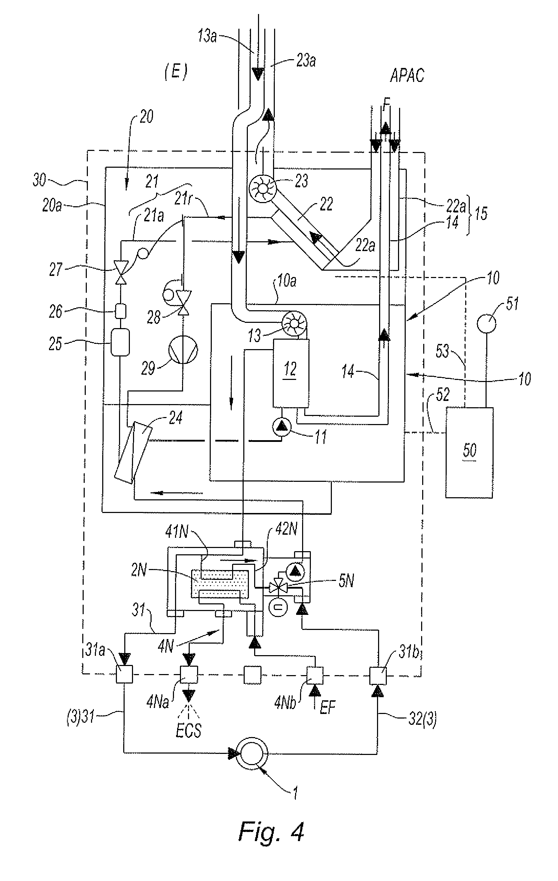

Die Wärmetauscherrohre 7 besitzen gemäß den Fig. 1, 2 und 3 einen im Wesentlichen rechteckigen Querschnitt mit ein- und/oder austrittsseitigen Radien oder sind, wie in Fig. 4 gezeigt, mit einem sichelförmigen Querschnitt versehen. In diesem Fall weisen die jeweils einem benachbarten Wärmetauscherrohr 7' zugeordneten Flanken einen identischen Innen- und Außenradius auf und die sichelförmigen Wärmetauscherrohre 7' auf beiden Halbseiten der Mittelachse sind spiegelsymmetrisch zueinander angeordnet. Daher ist gemäß Fig. 4 auf der Symmetrieebene, unterhalb der Brennkammer, in der ersten und zweiten Wärmetauscherstufe A, B jeweils ein längssymmetrisches Ausgleichsrohr 11 angeordnet, welches auf beiden Längsseiten an die spiegelsymmetrischen Geometrien der sichelförmigen Wärmetauscherrohre 7' angepasst ist.

Die Durchströmung des Brennwertkessels ist unabhängig von der gewählten Rohrgeometrie. Das Rücklaufwasser strömt bei allen dargestellten Varianten, ausgehend vom Rücklaufanschlussstutzen 5 im unteren Bereich, parallel durch alle Wärmetauscherrohre 7, 7' der zweiten Wärmetauscherstufe B, wird am gegenüber liegenden Ende der Anordnung nach oben umgelenkt und strömt dann parallel durch alle Wärmetauscherrohre 7, 7' der ersten Wärmetauscherstufe A. Danach folgt eine erneute Umlenkung nach oben, bevor das erwärmte Wasser oberhalb der Brennkammer 1 am Vorlaufanschlussstutzen 4 den Wasserraum verlässt.

Oberhalb der Brennkammer ist ein etwa horizontal verlaufender und die Brennkammer 1 nach oben hin mit seiner halbrunden Form begrenzender Schacht 12 angeordnet, welcher von beabstandeten Verstärkungsrippen 13 durchzogen wird. Diese sind durchlässig für die Wasserströmung gestaltet, wie beispielhaft mit Durchbrechungen gezeichnet. In den Schacht 12 tritt vorgewärmtes Wasser nach dem Austritt aus den Wärmetauscherrohren 7, 7' der ersten Wärmetauscherstufe A, auf der dem Deckelelement 2 zur Aufnahme des Brenners gegenüber liegenden Seite, stirnseitig ein und durch den Vorlaufanschlussstutzen 4 auf der Oberseite des Schachtes 12 im brennernahen Bereich wieder aus.

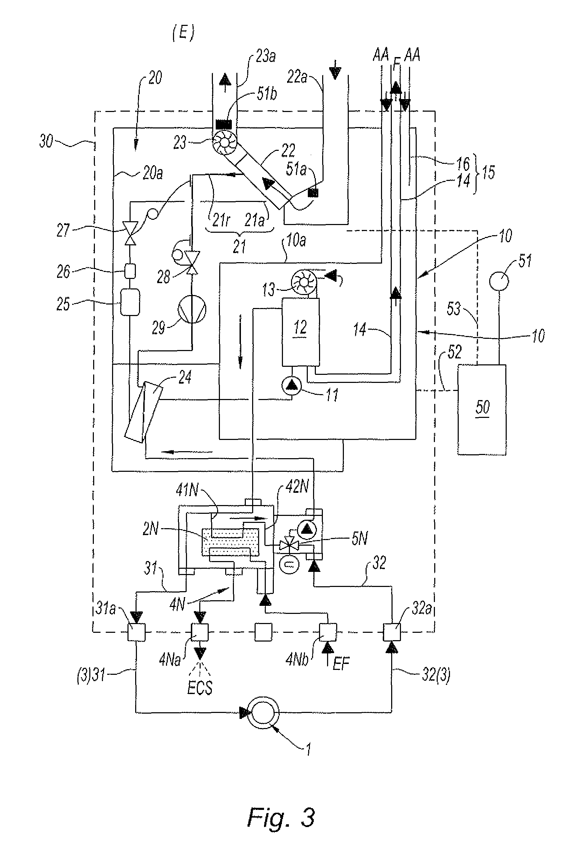

Gemäß Fig. 3 und Fig. 4 erstreckt sich der Schacht 12 mit seinen beiden nach unten gerichteten Längsseiten bis in die äußeren Randbereiche der jeweils oberen Wärmetauscherrohre 7, 7' der ersten Wärmetauscherstufe A, wobei der Aufbau mit den schräg gestellten Wärmetauscherrohren 7' gemäß Fig. 4 einen etwas verkürzten Schacht 12 zeigt, weil die Wärmetauscherrohre 7' wegen Form und Anordnung bis oberhalb der horizontalen Mittelachse der Brennkammer 1 reichen. Weiterhin ist der die Brennkammer 1 nach oben hin begrenzende Wasser führende Schacht 12 gemäß Fig. 4 im Bereich seiner beiden nach unten gerichteten Längsseiten mit einer längs verlaufenden Trennwand 14 so unterteilt, dass in den beiden Randbereichen jeweils ein weiterer Kanal 15 mit einem kleineren Querschnitt als der verbleibende übrige Querschnitt des Schachtes 12 ausgebildet wird. Die beiden Kanäle 15 werden entweder parallel oder entgegengesetzt zur ersten Wärmetauscherstufe A durchströmt.

## Patentansprüche

1. Brennwertkessel, umfassend einen Gas- oder Ölbrenner in einer Brennkammer (1), welche mindestens auf einem Großteil ihres Umfangs von einem mit Wasser durchströmten Wärmetauscher begrenzt ist, mindestens einen Spalt (4) für den Durchtritt von Heizgasen durch den Wärmetauscher in einen radial außerhalb des Wärmetauschers angeordneten Abgassammelraum, welcher einen Anschlussstutzen (10) für eine Abgasleitung aufweist, ein vorderes Deckelelement (2) zur Aufnahme des Brenners, ein hinteres Deckelelement (3) als Verschluss für die Brennkammer (1), sowie einen Rücklaufanschlussstutzen (5) im unteren und einen Vorlaufanschlussstutzen (6) im oberen Bereich der Anordnung,
**dadurch gekennzeichnet, dass** die Brennkammer (1) etwa horizontal angeordnet ist, mindestens im unteren und in den seitlichen Bereichen von mehreren, mit der Längsachse der Brennkammer (1) parallelen Wärmetauscherrohren (7, 7') einer ersten Wärmetauscherstufe (A) begrenzt ist, welche jeweils zwischen zwei benachbarten Wärmetauscherrohren (7, 7') einen axial verlaufenden Spalt (4) für den Durchtritt von Heizgasen in radialer Richtung in einen ersten Abgassammelraum (8) ausbilden, und dass unterhalb der ersten brennkammernahen Wärmetauscherrohre (7, 7') eine zweite Anordnung mit Wärmetauscherrohren (7, 7') als zweite Wärmetauscherstufe (B) vorgesehen ist, so dass die Heizgase vom ersten Abgassammelraum (8) durch die axial verlaufenden Spalte (4) der zweiten Wärmetauscherstufe (B) strömen und danach in einen zweiten Abgassammelraum (9) mit einem Anschlussstutzen (10) für eine Abgasleitung gelangen.

2. Brennwertkessel nach Anspruch 1,
**dadurch gekennzeichnet, dass** alle Wärmetauscherrohre (7, 7') jeweils die gleiche Geometrie aufweisen und dass die Gesamtanordnung symmetrisch zur vertikalen Längsachse ist.

3. Brennwertkessel nach Anspruch 1 oder 2,
**dadurch gekennzeichnet, dass** Wärmetauscherrohre (7, 7') so angeordnet sind, dass der sich jeweils zwischen zwei benachbarten Wärmetauscherrohren (7, 7') ergebende Spalt (4) ein Gefälle nach außen und/oder unten aufweist, um Kondenswasser aus der Brennkammer (1) und/oder einem Spalt (4)nach außen in einen der Abgassammelräume (8, 9) abzuleiten.

4. Brennwertkessel nach einem der Ansprüche 1 bis 3,
**dadurch gekennzeichnet, dass** die Wärmetauscherrohre (7, 7') jeweils stirnseitig mit dem vorderen und hinteren Deckelelement (2, 3) verbunden und dort wasserseitig angeschlossen sind.

5. Brennwertkessel nach einem der Ansprüche 1 bis 4,
**dadurch gekennzeichnet, dass** in eine oder beide Flanken eines Wärmetauscherrohres (7, 7') als den Spalt (4) begrenzende Oberflächen Sicken und/oder Nocken eingebracht sind, welche die Breite des Spaltes (4) definieren und sich aufeinander und/oder auf der gegenüber liegenden Oberfläche abstützen.

6. Brennwertkessel nach einem der Ansprüche 1 bis 5,
**dadurch gekennzeichnet, dass** die Wärmetauscherrohre (7) aus Strangpressprofilen mit einem im Wesentlichen rechteckigen Querschnitt, wahlweise mit ein- und/oder austrittsseitigen Radien, bestehen.

7. Brennwertkessel nach einem der Ansprüche 1 bis 6,
**dadurch gekennzeichnet, dass** die Wärmetauscherrohre (7) der ersten Wärmetauscherstufe (A) die untere Hälfte der Brennkammer (1) begrenzen und symmetrisch zur vertikalen Mittelachse der Brennkammer (1) angeordnet sind, wobei die Außenseite des jeweils letzten Wärmetauscherrohres (7) auf beiden Seiten auf oder knapp unterhalb der horizontalen Mittelachse der Brennkammer (1) angeordnet ist.

8. Brennwertkessel nach einem der Ansprüche 1 bis 5,
**dadurch gekennzeichnet, dass** der Querschnitt der Wärmetauscherrohre (7') sichelförmig gestaltet ist, wobei die jeweils einem benachbarten Wärmetauscherrohr (7') zugeordneten Flanken einen identischen Innen- und Außenradius aufweisen.

9. Brennwertkessel nach einem der Ansprüche 1 bis 5 oder 8,
**dadurch gekennzeichnet, dass** der Querschnitt der Wärmetauscherrohre (7') sichelförmig gestaltet ist, und dass die radial nach innen und außen gerichteten Flächen der Wärmetauscherrohre (7') parallel oder etwa parallel zueinander ausgerichtet sind.

10. Brennwertkessel nach einem der Ansprüche 1 bis 5, 8 oder 9,
**dadurch gekennzeichnet, dass** die sichelförmigen Wärmetauscherrohre (7') auf beiden Halbseiten der Mittelachse der Brennkammer (1) spiegelsymmetrisch zueinander angeordnet sind

11. Brennwertkessel nach einem der Ansprüche 1 bis 5, 8, 9, oder 10,
**dadurch gekennzeichnet, dass** unterhalb der Brennkammer (1), auf der Symmetrieebene, in der ersten und zweiten Wärmetauscherstufe (A, B) jeweils ein längssymmetrisches Ausgleichsrohr (11) angeordnet ist, welches auf beiden Längsseiten an die spiegelsymmetrischen Geometrien der sichelförmigen Wärmetauscherrohre (7') angepasst ist und mit dem jeweils zugeordneten benachbarten Wärmetauscherrohr (7') einen axial verlaufenden Spalt (4) für den Durchtritt von Heizgasen bildet.

12. Brennwertkessel nach einem der Ansprüche 1 bis 11,
**dadurch gekennzeichnet, dass** das Rücklaufwasser, ausgehend vom Rücklaufanschlussstutzen (5) im unteren Bereich, parallel durch alle Wärmetauscherrohre (7, 7') der zweiten Wärmetauscherstufe (B) strömt, am gegenüber liegenden Ende der Anordnung nach oben umgelenkt wird und parallel durch alle Wärmetauscherrohre (7, 7') der ersten Wärmetauscherstufe (A) strömt, dann erneut nach oben umgelenkt wird und oberhalb der Brennkammer (1) zum Vorlaufanschlussstutzen (6) im oberen Bereich der Anordnung gelangt.

13. Brennwertkessel nach einem der Ansprüche 1 bis 12,
**dadurch gekennzeichnet, dass** oberhalb der Brennkammer (1) ein etwa horizontal verlaufender und die Brennkammer (1) nach oben hin begrenzender Schacht (12) angeordnet ist, wobei vorgewärmtes Wasser nach dem Austritt aus den Wärmetauscherrohren (7, 7') der ersten Wärmetauscherstufe (A), auf der dem Deckelelement (2) zur Aufnahme des Brenners gegenüber liegenden Seite, stirnseitig in den Schacht (12) eintritt und durch einen Vorlaufanschlussstutzen (6) auf der Oberseite des Schachtes (12), insbesondere im brennernahen Bereich, austritt.

14. Brennwertkessel nach einem der Ansprüche 1 bis 13,
**dadurch gekennzeichnet, dass** der die Brennkammer (1) nach oben hin begrenzende Wasser führende Schacht (12) einen rechteckigen, trapezförmigen, dachartigen, nach oben hin gewölbten oder etwa halbrunden Querschnitt besitzt.

15. Brennwertkessel nach einem der Ansprüche 1 bis 14,
**dadurch gekennzeichnet, dass** der die Brennkammer (1) nach oben hin begrenzende Wasser führende Schacht (12) sich mit seinen beiden nach unten gerichteten Längsseiten bis etwa in die äußeren Randbereiche der jeweils oberen Wärmetauscherrohre (7, 7') der ersten Wärmetauscherstufe (A) erstreckt.

16. Brennwertkessel nach einem der Ansprüche 1 bis 15,
**dadurch gekennzeichnet, dass** der die Brennkammer (1) nach oben hin begrenzende Wasser führende Schacht (12) im Bereich seiner beiden nach unten gerichteten Längsseiten mit einer längs verlaufenden Trennwand (14) unterteilt ist, so dass in den beiden Randbereichen jeweils ein weiterer Kanal (15) mit einem kleineren Querschnitt als der verbleibende übrige Querschnitt des Schachtes (12) ausgebildet wird.

17. Brennwertkessel nach einem der Ansprüche 1 bis 16,
**dadurch gekennzeichnet, dass** die beiden Kanäle (15) im seitlichen Bereich des Schachtes (12) parallel zur ersten Wärmetauscherstufe (A) durchströmt werden und dass das Wasser danach umgelenkt wird und den übrigen, oberen Bereich des Schachtes (12) in Richtung des Vorlaufanschlussstutzens (6) durchströmt.

18. Brennwertkessel nach einem der Ansprüche 1 bis 16,
**dadurch gekennzeichnet, dass** die beiden Kanäle (15) im seitlichen Bereich des Schachtes (12) entgegengesetzt zur ersten Wärmetauscherstufe (A) und genauso wie der übrige Bereich des Schachtes (12) in Richtung des Vorlaufanschlussstutzens (6) durchströmt werden, wobei die Kanäle (15) und/oder deren Ein- und/oder Auslassbereiche so ausgelegt sind, dass die Strömungsgeschwindigkeit in den Kanälen (15) höher ist als im übrigen Bereich des Schachtes (12).

19. Brennwertkessel nach einem der Ansprüche 1 bis 18,
**dadurch gekennzeichnet, dass** der Rücklaufanschlussstutzen (5) auf der dem Deckelelement (3) zur Aufnahme des Brenners gegenüber liegenden Stirnseite angeordnet ist.
